# EUROPEAN PATENT APPLICATION

(11) **EP 2 040 157 A2**
(43) Date of publication of application: **25.03.2009**
(21) Application number: 08250649.4
(22) Date of filing: 26.02.2008
(51) Int. Cl.: G06F 3/06

(54) **Storage subsystem and storage control method**

(30) Priority: 20.09.2007 JP 2007243504
(71) Applicant: Hitachi, Ltd., Chiyoda-ku Tokyo 100-8280 (JP)
(72) Inventor: Kanda, Akitsugu c/o Hitachi, Ltd. Intellectual Property Group, Tokyo 100-8220 (JP); Murotani, Akira c/o Hitachi, Ltd. Intellectual Property Group, Tokyo 100-8220 (JP)
(74) Representative: Hodsdon, Stephen James

(57) **Abstract**

Failures may occur during the execution of an operation by a user, for example, when a directory quota cannot be expanded, or when a directory lacking in storage resources, which are to be assigned from a file system, emerges even if the directory quota can be expanded. A storage subsystem is characterized by autonomously detecting quota expansion for a user; comparing the total of plural quotas with a limit value; and allocating a storage area set in a storage device in advance to the limit value if, based on the result of the comparison, the total value exceeds the limit value.

## Description

This application relates to and claims priority from Japanese Patent Application No. 2007-243504, filed on September 20, 2007, the entire disclosure of which is incorporated herein by reference.

The invention relates to a storage system provided with a storage subsystem and a storage device, and particularly relates to a system with a quota management function.

A quota management function in a storage system indicates a function limiting the usage of disk capacity to prevent a specific user from weighing down a system by excessively engaging the disk capacity.

Regarding prior art related to a storage device having a quota function, JP2005-056011 A discloses a method of managing usage of a file system for a user, the file system being connected to the user via a network, the method including managing the specified size of write to the file system for the user as an accumulated value; specifying a time for making a judgment about the limitation on disk usage from the accumulated value and.a predetermined threshold value; and making the judgment about the limitation on the disk usage at the specified time.

Also, JP08-263340 A discloses a file management system having an automatic expansion function for automatically executing area expansion processing for a set automatic expansion size, the system including expansion size adjustment means for adjusting the automatic expansion size to an appropriate value for each file.

In a NAS management device, a quota can be managed for each file system or directory. In order to facilitate user operation smoothly, an administrator of the NAS device needs to increase the quota assigned to each directory in accordance with the usage status of a storage device by a user.

At this point, when a quota total for plural directories may exceed a limit value set for the file system, the NAS device administrator needs to expand the disk capacity assigned to the file system in advance.

In order to expand the disk capacity assigned to the file system, for example, a new logical unit needs to be created, and then it needs to be assigned to the file system. The former is performed by an administrator of a disk device, while the latter is performed by the NAS device administrator, which is why it has been difficult to integrate both sides.

For the above reason, failures may occur during the execution of an operation by a user, for example, when the directory quota cannot be expanded, or when a directory lacking in storage resources, which are to be assigned from the file system, emerges even if the directory quota can be expanded.

The invention has been made in light of the above, and therefore has an object to provide a storage subsystem and a storage control method that can autonomously expand a limit value for a storage capacity in response to quota expansion.

In order to preferably attain the above object, according to an aspect of the invention, provided is a storage subsystem characterized by autonomously detecting quota expansion for a user; comparing a total of plural quotas with a limit value; and allocating a storage area set in a storage device in advance to the limit value if, based on the result of the comparison, the total value exceeds the limit value.

According to aspects of the invention, a storage subsystem and a storage control method that can autonomously expand a limit value for a storage capacity in accordance with quota expansion can be provided.

### Brief Description of the Drawings

Fig. 1 is a hardware block diagram of a storage system provided with a NAS device serving as a storage subsystem and a storage device according to an embodiment of the invention.

Fig. 2 is a block diagram showing an example of a logical configuration for a storage device 12.

Fig. 3 shows a block of a NAS manager that realizes an OS function in a NAS device.

Fig. 4 is a block diagram explaining that a built-in disk in a NAS device records a file system management database and a directory quota information management database.

Fig. 5 shows an example of a file system management table.

Fig. 6 shows an example of a directory quota information management table.

Fig. 7 shows an example of an input screen a NAS manager provide to a management device of a system administrator.

Fig. 8 is a flowchart showing an operation for expanding the total storage capacity of a file system.

Fig. 9 is a flowchart according to another embodiment for expanding the total storage capacity of a file system.

Fig. 10 is a flowchart explaining processing for increasing the total storage capacity of a file system during stop of processing involving I/O from a user.

Fig. 11 shows another example of a management screen provided to a system administrator as a GUI.

Fig. 12 is a flowchart explaining still another embodiment for increasing the total storage capacity of a file system.

Fig. 13 is a flowchart explaining yet still another embodiment for increasing the total storage capacity of a file system.

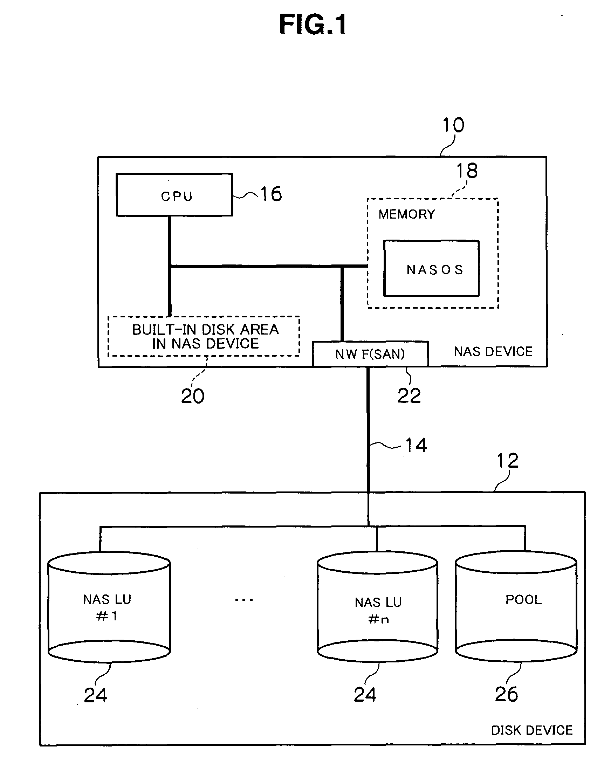

An embodiment of the invention will be described below. Fig. 1 is a hardware block diagram of a storage system composed of a NAS device 10 serving as a storage subsystem and a storage device 12 according to the invention. The storage device 12 includes plural hard disks, and is connected to the NAS device via a network 14.

The NAS device is provided with a control circuit 16 including a CPU, memory that stores a program that realizes a NAS OS; a built-in disk area 20 including plural management tables; and a network interface (NW IF) 22 connected to the network 14. The network to which the NAS device is connected may be an IP network, or a SAN when the NAS device is configured as a NAS head.

A storage area for the plural disks in the storage device 12 has been virtualized as logical units. The logical units are assigned static storage areas, and include first type logical units 24 - the capacity of which cannot be expanded, and a second type logical unit 26 which serves as a pool volume and in which units for a storage area can be sequentially allocated to a virtual volume. An example of a preferred storage resource for the storage device is a hard disk, but it may be an optical disk or semiconductor memory such as flash memory.

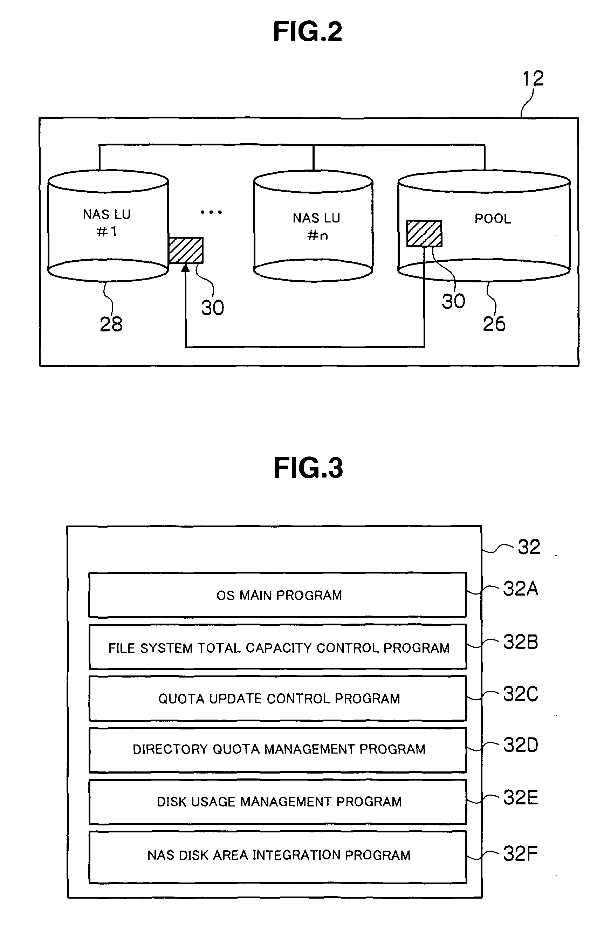

Fig. 2 is a block diagram of the storage device 12 provided with the second type logical unit 26. When the NAS device 10 receives write access from a user such as a host computer or a server, and writes data to the storage device 12, small units 30 for a storage area are sequentially allocated from the pool 26 to a logical unit 28 accessed by the NAS device 10, and the data is written to the small unit. As disclosed in JP2003-015915 A, the NAS device 10 has a user recognize the second type logical unit 26 as a virtual volume having sufficient storage capacity.

Fig. 3 shows a block explaining a NAS manager that realizes an OS function in the NAS device. The NAS manager 32 is provided with an OS main program 32A for realizing a primary part of the OS function, a program 32B for controlling the total storage capacity of the file system in the NAS device, a control program 32C for updating a directory quota, a control program 32D for managing a directory quota; a program 32E for managing the usage of a block capacity assigned to a directory; and a program 32F for combining logical units for disks. The operation of each program will be described later. The directory quota indicates a quota (storage capacity) set for each directory. The NAS manager is provided to a user or a system administrator by the control circuit 16 executing the above management programs.

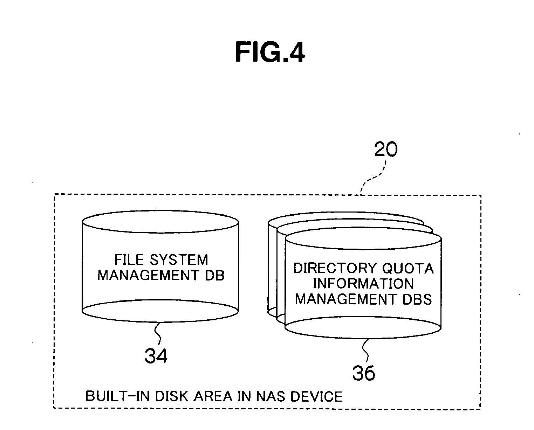

The built-in disk area 20 in the NAS device in Fig. 1 is provided with a database 34 for managing file systems, and databases 36 for managing directory quotas. The NAS manager 32 extracts data belonging to main items from the management databases, and records the extracted data in management tables in the disk area. Note that the databases in Fig. 4 may be formed in the storage area in the disk device 12.

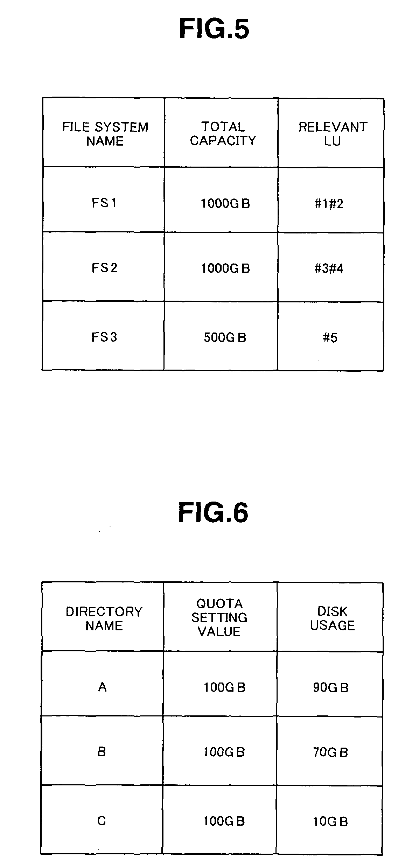

Fig. 5 shows an example of a file system management table. The total storage capacity and logical units belonging to a file system are registered in the table for each file system in the NAS device. Also, Fig. 6 is a directory quota information management table for managing a directory quota and the usage of a storage area assigned to a directory for each of the plural directories belonging to a file system.

In Fig. 1, the above-described logical units are set in the storage device 12 in advance, and with the increase of the directory quota, the logical units are sequentially allocated to the file systems. There is no particular limitation on the capacity of the first type logical unit 24, and the capacity is arbitrarily set by an administrator of the storage device.

The system administrator sets the total storage capacity for each file system by using a GUI or command, and recognizes the logical units in the storage device and maps them to the file systems.

Also, the system administrator can set the directory quota for each directory via the GUI or command. When the directory quota is set, a system administrator of the NAS device can manage the upper limit of a block capacity or the number of i-nodes for each directory.

The NAS manager 32 registers the directory quota in the table shown in Fig. 6. The NAS manager also continuously monitors the disk usage of each directory, and stores the usage in the management table for update.

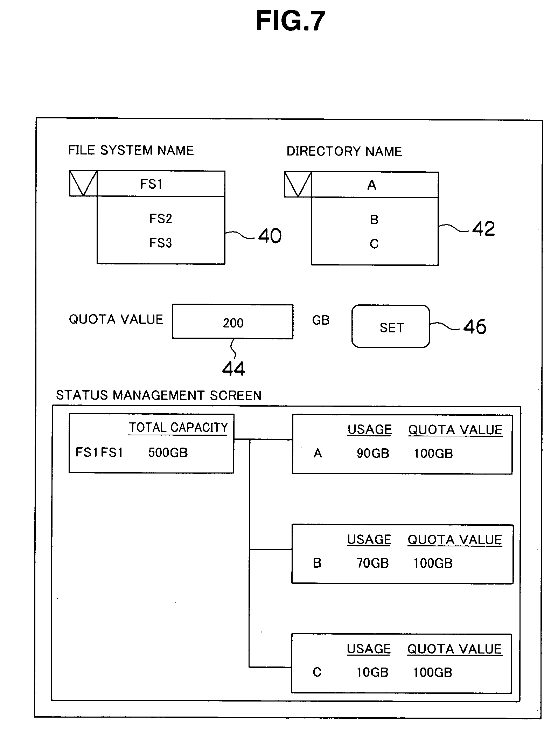

Next, a GUI used by a system administrator of the NAS device for setting the directory quota will be described. Fig. 7 shows an example of an input screen provided by the NAS manager to a management device of the system administrator.

Reference numeral 40 denotes an area where a system administrator selects a file system; 42 denotes an area where a directory belonging to the relevant file system is selected; 44 denotes an area where a directory quota is input; and 46 denotes an area that targets an input for determining the input directory quota. When the system administrator conducts the above input, the screen displays, for each file system (FS1), the total storage capacity mapped to the relevant file system, directories (A, B, C, ...) denoted by reference numeral 48, a quota for each directory, and a usage rate of a disk capacity for each directory.

The NAS manager sequentially allocates the total capacity, which has been assigned to the file system, to the directories. For example, when the directory quota for a certain directory is expanded, and the storage area corresponding to the directory is consumed by a user, data may not be written to another directory even if the storage capacity for which data has been written by a user has not reached the quota for the other directory unless the total storage capacity of the file system is expanded. In light of the above, before this occurs, the NAS device expands the total storage area of the file system.

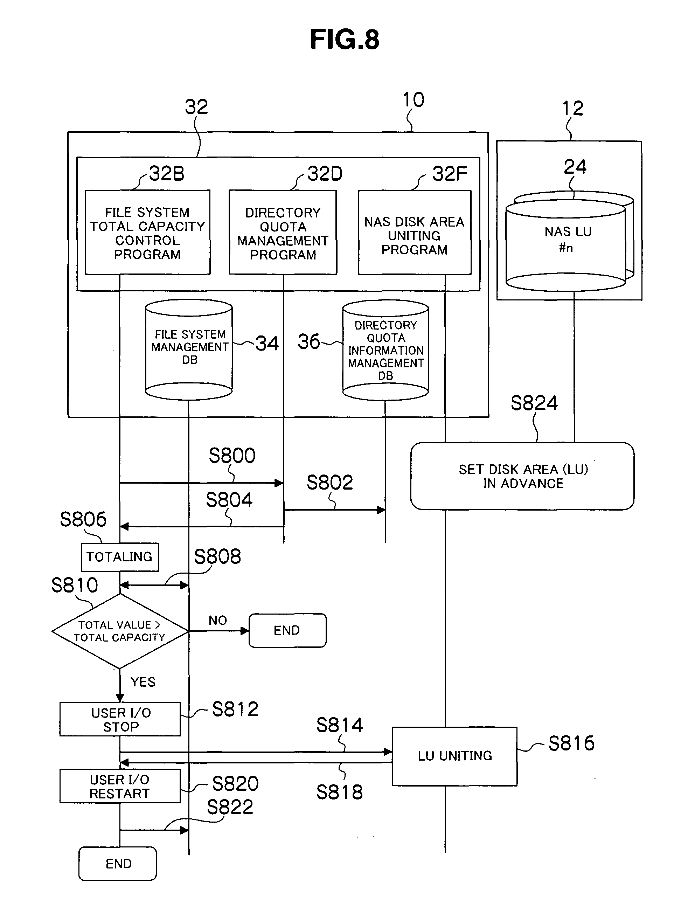

Next, operation for expanding the total capacity of the file system which is executed by the NAS manager will be explained with reference to the flowchart in Fig. 8. The file system total capacity control program 32B in the NAS device requests directory quotas for the directories under the file system from the directory quota management program 32D (S800). The requests are continuously issued from the file system total capacity control program 32B to the directory quota management program 32D on a fixed period basis (e.g., a day or week basis).

The directory quota management program 32D accesses the directory quota information management database (or alternatively accesses the management table (Fig. 6)), and acquires the directory quota for each directory (S802).

The file total capacity control program 32B, which has acquired the directory quotas for all the directories (S804), totals all the directory quotas (S806).

The file total capacity control program 32B accesses the file system management database 34 (or alternatively accesses the management table (Fig. 5)), and acquires the total storage capacity set for the file system (S808).

Then, the file total capacity control program 32B compares the total value with the total capacity of the file system (S81 0), and terminates processing if the totaled value is smaller than the total storage capacity assigned to the file system.

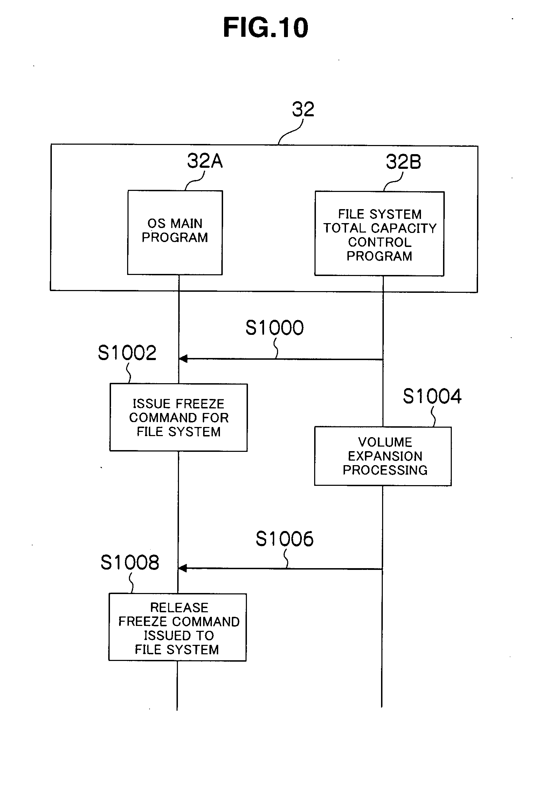

Meanwhile, if the total value is greater than or equal to the total storage capacity assigned to the file system, the file total capacity control program 32B suspends processing involving I/O from a user, and executes processing for increasing the total capacity of the file system during the stop. The details of that processing are explained in Fig. 10.

As shown in Fig. 10, the file system total capacity control program 32B requests that the OS main program 32A suspend the processing involving I/O from a user (S1000).

The OS main control program that has received the request issues a freeze command to the file system in the NAS device 10 (S1002). A file system that has received a freeze command does not respond to file access from a user.

During this time, the file system total capacity control program 32B executes expansion processing (S1004) for the capacity of the file system.

Expansion processing is executed by integrating (S816) the logical unit that has been set as one for the NAS device in advance (S824) with the logical unit that has already been assigned to the file system. This uniting is performed by the disk area uniting program 32F in the NAS manager. The disk area uniting program is realized by a conventional LVM (Logical Volume Manger). The file system is provided to a user device by the OS in the NAS device.

The disk area uniting program 32F recognizes a logical unit that has been set for the NAS device in advance and that has not been assigned to the file system in the storage device; and upon receiving a request from the file system total capacity control program 32B (S814), integrates the logical unit with the logical unit assigned to the file system (S816).

Then, the disk area uniting program 32F notifies the file system total capacity control program 32B that the logical units have been integrated; and the total capacity of the file system has been expanded (S818). Upon receiving the notification, the file system total capacity control program 32B gives an order to release the freeze command issued to the file system (S1008), and releases processing for suspending I/O from a user (S820). The file system total capacity control program 32B updates the file system total capacity in the file system management database 34.

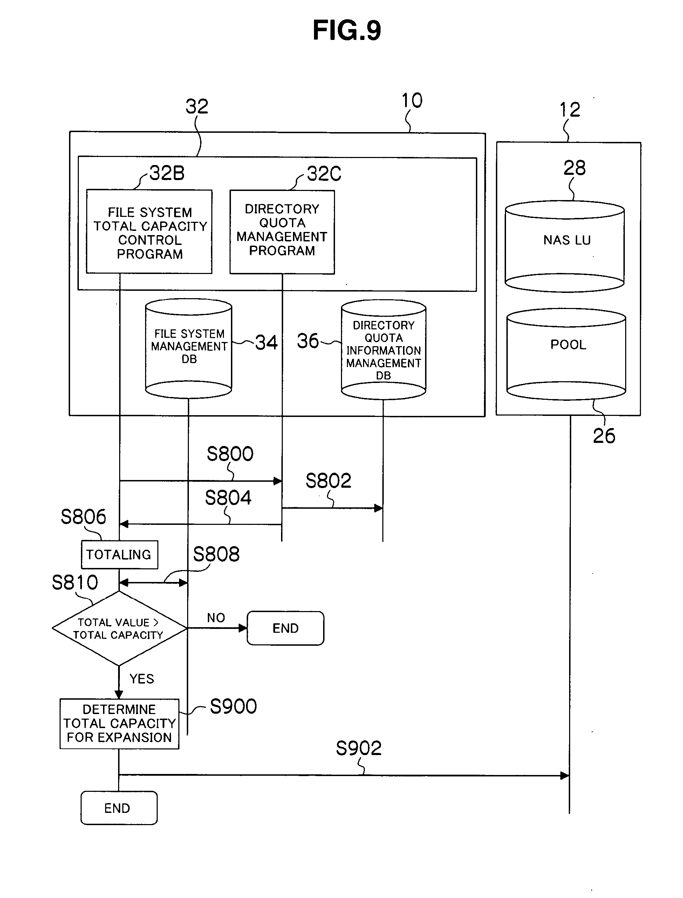

Fig. 9 is a flowchart according to another embodiment for expanding the total capacity of a file system. The point in this embodiment that differs from those in Figs. 8 and 10 is that a logical unit belonging to the file system utilizes a volume having a virtual capacity that is not bound by a static capacity, thereby expanding the total capacity of the file system. This has been explained with reference to Fig. 8. The components in Fig. 9 the same as those in Fig. 8 are denoted using the same reference symbols, and explanation of those components is omitted.

When the file system total capacity control program 32B calculates the total value of all the directory quotas, and when the total value is greater than or equal to the total capacity of the file system, the file system total capacity control program 32B determines the capacity for expansion for the file system (S900).

The file system total capacity control program 32B accesses the pool volume 26 in the storage device (S902), and maps the storage area corresponding to the capacity for expansion from the pool volume 26 to the virtual volume 28.

Unlike the above-described flowchart in Fig. 8, the flowchart in Fig. 9 does not need to involve processing for integrating logical units for the increase of the total capacity of the file system, and therefore does not require that I/O from a user device to the NAS device be suspended.

In the above embodiments, judgments of necessity are made constantly and repeatedly concerning the increase of the total capacity of the file system, as sown in Fig. 8. Next, another embodiment will be explained in which processing for increasing the total capacity of a file system is executed when a directory quota is increased.

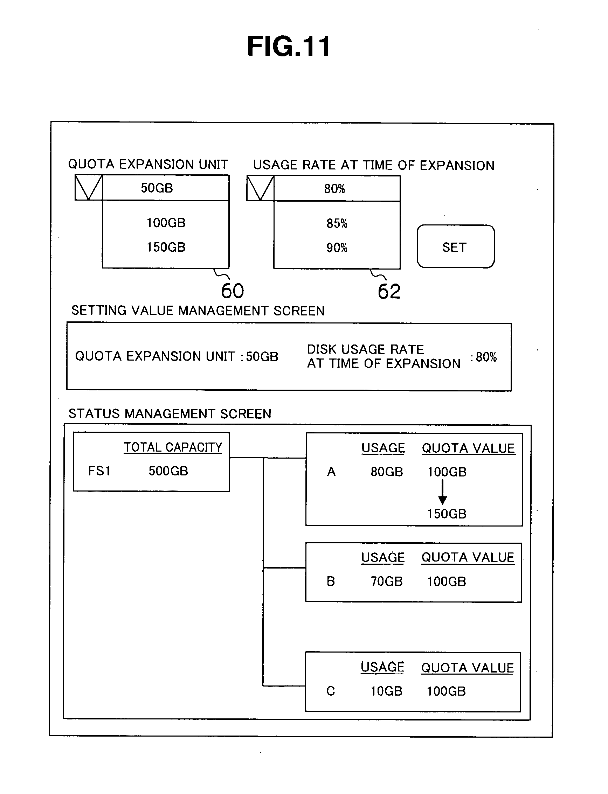

Fig. 11 shows an example of a management screen provided as a GUI to a system administrator. Reference numeral 60 denotes an area where an expansion unit for a directory quota is selected by the system administrator; and 62 denotes an area where a time for expansion of the relevant directory quota is selected. When the system administrator selects a specified value and then confirms the selection by pressing a setting button, the input result is notified to the quota update control program 32C. The quota update control program 32C automatically increases the directory quota in accordance with the input result.

For example, as shown in directory A in Fig. 11, when the disk usage rate of the directory quota reaches 80%, 50GB is added to the quota for the relevant directory. The program 32E for managing the disk usage status regularly acquires the usage rate to the storage capacity mapped to the directory, and records the acquired rate in the directory quota information management database 36 shown in Fig. 4.

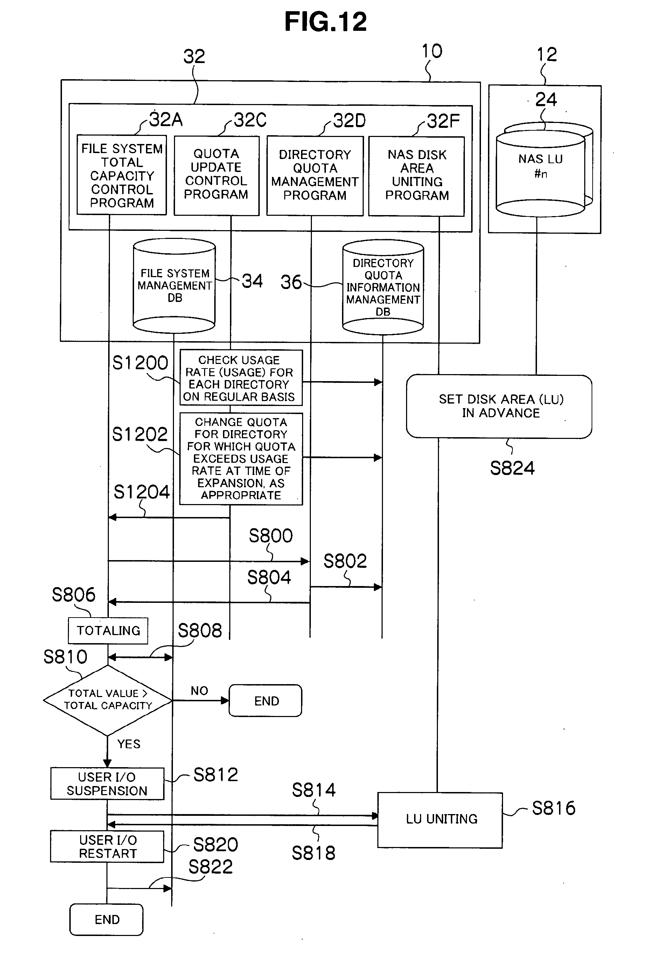

Fig. 12 is a flowchart for increasing the total capacity of the file system in this embodiment. The quota update control program 32C regularly checks the directory quota information management database 36 or the management table (Fig. 6), acquires the usage rate of the disk capacity for each directory (S1200), and changes the directory quota when the usage rate exceeds the threshold value that has been explained with reference to Fig. 11 (S1202).

The quota update control program 32C notifies the file system total capacity management program 32B that the quota has been changed (S1204). The file total capacity control program 32B that has received the notification then increases the total capacity of the file system, as shown in the flowchart in Fig. 8.

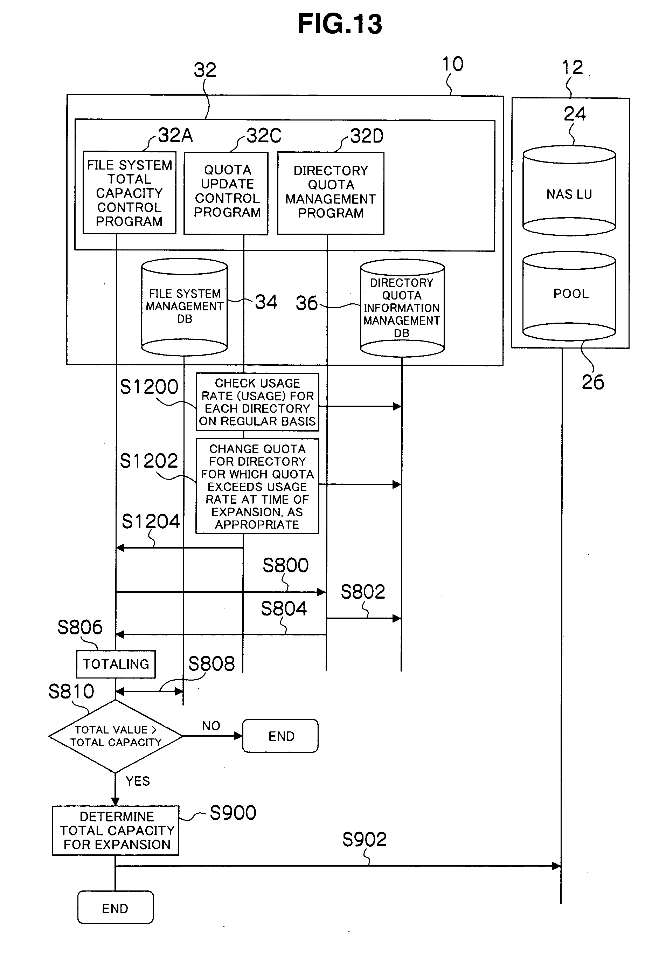

Fig. 13 shows a modified example of the above embodiment, and corresponds to the flowchart in Fig. 9. More specifically, the units for a storage capacity are sequentially allocated from a pool volume to a logical unit assigned to a file system.

According to the above-described embodiments, the NAS device continuously checks the directory quota value, and expands the total storage capacity of the file system when the total value of the directory quotas exceeds the total storage capacity of the file system. Therefore, the occurrence of a directory to which data cannot be written can be eliminated.

It has been explained in the above embodiments that the total storage capacity of the file system is expanded by integrating or combining the logical volume in the storage device with the logical volume for the file system. However, a logical volume may be divided into plural small volumes, and the divided logical volume may be assigned to a file system.

According to this embodiment, storage resources in a storage device can be used effectively compared with allocating a high-capacity volume to a file system at one time.

Also, the NAS manager may constantly check the remaining capacity of the pool volume, and when the pool volume lacks storage capacity, a warning about this may be issued to an administrator of the storage device. The administrator, having received the notification, adds storage resources such as a hard disk to the storage device.

Moreover, the logical units assigned to the file system or the above-mentioned virtual volume may be ranked in accordance with RAID level, disk performance, and vendor, and the NAS manager may compare the policy of the file system with the rank for the logical unit or virtual volume, and assign the logical unit or virtual volume having a rank close to the file system policy to the file system.

Furthermore, a logical unit having a static capacity may be assigned to a file system to expand the capacity of the file system, while another file system may be assigned a storage area via a logical unit having a virtual capacity and a pool volume. Also, a configuration may be adopted in which a logical unit having a static capacity, which is to be assigned to a file system, is consumed; and then a storage area is assigned to the file system via a pool volume.

## Claims

1. A storage subsystem that can be connected to a user device and a storage device and that controls data write to a storage area in the storage device in accordance with write access from the user device, comprising:
a control circuit; and memory that records a management program, wherein:
the control circuit, in accordance with the management program:
sets plural partitions; sets a quota for each of the partitions; increases the set quota for each partition; acquires the quotas for the partitions, and totals all the acquired quotas; compares a limit value set for an assembly of the partitions with a total value of the quotas; and increases the limit value based on the result of the comparison.

2. The storage subsystem according to claim 1, wherein the control circuit regularly executes acquisition of the quota set for each of the partitions.

3. The storage subsystem according to claim 1 or claim 2, wherein the control circuit executes acquisition of the quota set for each of the partitions with the increase of the quota for at least one of the partitions as a trigger.

4. The storage subsystem according to any one of claims 1 to 3, wherein the partition is a directory for a file system; the quota is a storage capacity set for the directory; and a total storage capacity serving as the limit value is set for the file system the directory belongs to.

5. The storage subsystem according to claim 4, wherein the control circuit expands the total storage capacity of the file system when the total value of the quotas exceeds the limit value.

6. The storage subsystem according to claim 5, wherein the control circuit expands the total storage capacity of the file system by integrating a logical unit set for the storage area in the storage device with a storage area assigned to the file system.

7. The storage subsystem according to claim 5 or claim 6, wherein the control circuit expands the total storage capacity of the file system by allocating the storage area sequentially from the storage device to a virtual volume that has been made to correspond to the file system.

8. A storage control method that controls a storage subsystem, which is coupled to a user device and a storage device, conducting data write to a storage area in the storage device in accordance with write access from the user device, comprising:
setting plural partitions in the storage subsystem;
setting a quota for each of the partitions;
increasing the set quota for each partition;
acquiring the quotas for the partitions and totaling all the acquired quotas;
comparing a limit value set for an assembly of the partitions with a total value of the quotas; and
increasing the limit value based on the result of the comparison.
